(19) Europäisches Patentamt
European Patent Office
Office européen des brevets

(11) EP 1 913 992 A1

(12) EUROPEAN PATENT APPLICATION
published in accordance with Art. 153(4) EPC

(43) Date of publication:
23.04.2008 Bulletin 2008/17

(51) Int Cl.:
B01D 71/34 $^{(2006.01)}$   B01D 69/08 $^{(2006.01)}$
D01F 6/12 $^{(2006.01)}$

(21) Application number: 06781075.4

(22) Date of filing: 13.07.2006

(86) International application number:
PCT/JP2006/313989

(87) International publication number:
WO 2007/010832 (25.01.2007 Gazette 2007/04)

(84) Designated Contracting States:
AT BE BG CH CY CZ DE DK EE ES FI FR GB GR
HU IE IS IT LI LT LU LV MC NL PL PT RO SE SI
SK TR

(30) Priority: 20.07.2005 JP 2005210084

(71) Applicant: Kureha Corporation
Tokyo 103-8552 (JP)

(72) Inventors:
• SUZUKI, Kenichi
c/o KUREHA CORPORATION
Chuo-ku, Tokyo 103-8552 (JP)
• TADA, Yasuhiro
c/o POLYMER PROCESSING & PRODUCTS
RESEARCH LAB.
Omitama-Shi, Ibaraki-Ken 311-3436 (JP)

• TAKAHASHI, Takeo
c/o POLYMER PROCESSING & PRODUCTS
RESEARCH LAB.
Omitama-Shi, Ibaraki-Ken 311-3436 (JP)
• HINO, Masayuki
c/o POLYMER PROCESSING & PRODUCTS
RESEARCH LAB.
Omitama-Shi, Ibaraki-Ken 311-3436 (JP)
• ABE, Kosuke
Sakata-Shi, Yamagata-Ken 998-0022 (JP)
• MIZUNO, Toshiya
c/o POLYMER PROCESSING & PRODUCTS
RESEARCH LAB.
Omitama-Shi, Ibaraki-Ken 311-3436 (JP)

(74) Representative: Albrecht, Thomas
Kraus & Weisert
Patent- und Rechtsanwälte
Thomas-Wimmer-Ring 15
80539 München (DE)

(54) POROUS HOLLOW-YARN MEMBRANE OF VINYLIDENE FLUORIDE RESIN

(57) A hollow-fiber porous membrane comprising a hollow fiber-form porous membrane of vinylidene fluoride resin and having an average pore size Pm of 0.05 - 0.20 μm, a maximum pore size Pmax giving a ratio Pmax/Pm of at most 2.0 between the maximum pore size Pmax and the average pore size Pm and a standard deviation of pore size distribution of at most 0.20 μm based on a pore size distribution according to the half dry/bubble point method (ASTM · F316 and ASTM · E1294) is provided, as a hollow-fiber porous membrane of vinylidene fluoride resin having minute pores with a size (average pore diameter) and a further uniform pore size distribution suitable for water (filtration) treatment. The hollow-fiber porous membrane is produced through a process of producing a hollow-fiber porous membrane by melt-extruding a mixture of a vinylidene fluoride resin, a plasticizer and a good solvent for vinylidene fluoride resin into a hollow fiber-form, followed by cooling and extraction of the plasticizer, wherein the proportion of the good solvent in the total amount of the plasticizer and the good solvent contained in the mixture is increased to 20 - 35 wt.%.

EP 1 913 992 A1

**Description**

TECHNICAL FIELD.

The present invention relates to a hollow-fiber porous membrane (hollow fiber-form porous membrane) of vinylidene fluoride resin excellent in water (filtration) treatment performances, and a process for production thereof.

BACKGROUND ART

Vinylidene fluoride resin is excellent in chemical resistance, heat resistance and mechanical strength and, therefore, has been studied with respect to application thereof to porous membranes for separation. In the case of use for water (filtration) treatment, particularly for production of potable water or sewage treatment, a hollow fiber-form porous membrane is frequently used because it can easily provide a large membrane area per unit volume of filtration apparatus, and many proposals have been made including processes for production thereof (e.g., Patent documents 1-3 listed below).

Also, the present inventors, et al., have found that a process of melt-extruding a vinylidene fluoride resin having a specific molecular weight characteristic together with a plasticizer and a good solvent for the vinylidene fluoride resin into a hollow fiber-form and then removing the plasticizer by extraction to render the hollow fiber porous is effective for formation of a porous membrane of vinylidene fluoride resin having minute pores of appropriate size and distribution and also excellent in mechanical strength, and have made a series of proposals (Patent document 4 listed below, etc.). However, a strong demand exists for further improvements of overall performances including filtration performances and mechanical performances of the hollow-fiber porous membrane necessary for use as a filtration membrane. It is particularly desired to have pores having appropriate sizes for removing particles to be removed and a further uniform distribution.

Patent document 1 : JP-A 63-296939
Patent document 2 : JP-A 63-296940
Patent document 3 : JP-A 3-215535
Patent document 4 : WO2004/081109A

DISCLOSURE OF INVENTION

The present invention aims at providing a hollow-fiber porous membrane of vinylidene fluoride resin having pores of an appropriate size (average pore size) and a further uniform pore size distribution, and a process for production thereof.

A further object of the present invention is to provide a hollow-fiber porous membrane of vinylidene fluoride resin exhibiting a large water permeability in spite of a relatively small average pore size, and a process for production thereof.

The porous membrane of vinylidene fluoride resin according to the present invention has been developed so as to satisfy the above-mentioned objects and comprises a hollow fiber-form porous membrane of vinylidene fluoride resin and having an average pore size Pm of 0.05 - 0.20 $\mu$m, a maximum pore size Pmax giving a ratio Pmax/ Pm of at most 2.0 between the maximum pore size Pmax and the average pore size Pm and a standard deviation of pore size distribution of at most 0.20 $\mu$m based on a pore size distribution according to the half dry/bubble point method (ASTM·F316 and ASTM·E1294).

According to the study of the present inventors, it has been discovered that a hollow-fiber porous membrane of vinylidene fluoride resin having a further improved pore size distribution as described above can be effectively produced by a process including melt-extrusion of a composition containing a good solvent at a high proportion which has not been tried so far and subsequent removal of a plasticizer by extraction in the above-mentioned process of Patent document 4, etc., developed by the present inventors, et al..

More specifically, the process for producing a hollow-fiber porous membrane of vinylidene fluoride resin according to the present invention, comprises: adding, to 100 wt. parts of vinylidene fluoride resin, a plasticizer and a good solvent for vinylidene fluoride resin in a total amount of 100 - 300 wt. parts including 20 - 35 wt.% thereof of the good solvent, to form a composition, melt extruding the composition into a hollow-fiber film, introducing the hollow-fiber film into a cooling liquid to cool and solidify the film, and extracting the plasticizer from the hollow-fiber film to recover a hollow-fiber porous membrane. Particularly, according to the process, it is possible to remove a separate small sub-peak which has been frequently found in a larger pore size side of a main peak in a particle size distribution according to a conventional process, thereby making it possible to effectively prevent the slipping passage of particles to be removed.

BRIEF DESCRIPTION OF THE DRAWING

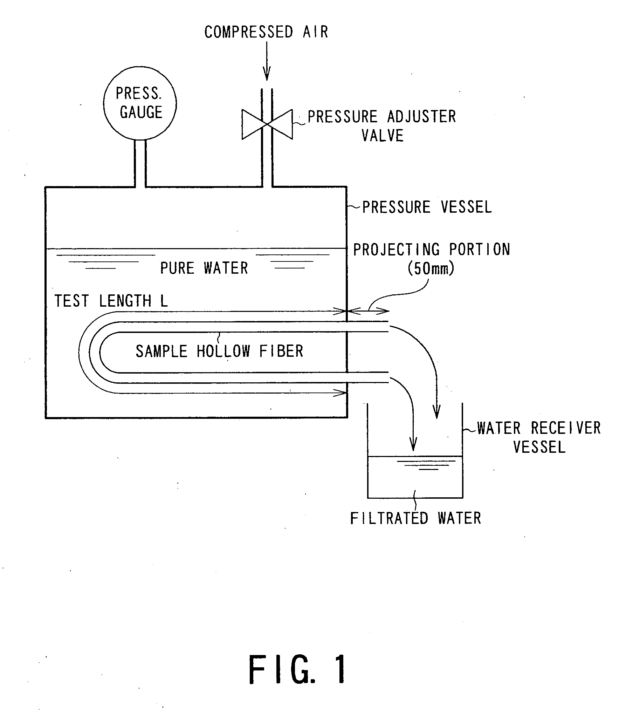

Fig. 1 is a schematic illustration of a water permeability-metering apparatus for evaluating water-treating performances of hollow-fiber porous membranes obtained in Examples and Comparative Examples.

BEST MODE FOR PRACTICING THE INVENTION

Hereinbelow, the hollow fiber-form porous water filtration membrane of vinylidene fluoride resin of the present invention will be described in order according to the production process of the present invention that is a preferred process for production thereof.

(Vinylidene fluoride resin)

In the present invention, a vinylidene fluoride resin having a weight-average molecular weight of $2 \times 10^5$ - $6 \times 10^5$ is preferably used as a principal membrane-forming material. If Mw is below $2 \times 10^5$, the mechanical strength of the resultant porous membrane becomes small. On the other hand, if Mw exceeds $6 \times 10^5$, the texture of phase separation between the vinylidene fluoride resin and the plasticizer tends to become excessively fine to result in a porous membrane exhibiting a lower water permeation rate when used as a microfiltration membrane.

The vinylidene fluoride resin used in the present invention may be homopolymer of vinylidene fluoride, i.e., polyvinylidene fluoride, or a copolymer of vinylidene fluoride together with a monomer copolymerizable with vinylidene fluoride, or a mixture of these. Examples of the monomer copolymerizable with vinylidene fluoride may include: tetrafluoroethylene, hexafluoropropylene, trifluoroethylene, chlorotrifluoroethylene and vinylidene fluoride, which may be used singly or in two or more species. The vinylidene fluoride resin may preferably comprise at least 70 mol% of vinylidene fluoride as the constituent unit. Among these, it is preferred to use homopolymer consisting of 100 mol% of vinylidene fluoride in view of its high mechanical strength.

A vinylidene fluoride resin of a relatively high vinylidene fluoride content as described above may preferably be obtained by emulsion polymerization or suspension polymerization, particularly preferably by suspension polymerization.

The vinylidene fluoride resin forming the porous membrane of the present invention is preferably one characterized by good crystallinity, i.e., a crystalline property of suppressing growth of spherulites but promoting the formation of network texture in the course of cooling, as represented by a difference Tm2 - Tc of at most 32°C, preferably at most 30°C, between an inherent melting point Tm2 (°C) and a crystallization temperature Tc (°C) of the resin as determined by DSC measurement in addition to the above-mentioned relatively large weight-average molecular weight of $2 \times 10^5$ - $6 \times 10^5$.

Herein, the inherent melting point Tm2 (°C) of resin should be distinguished from a melting point Tm1 (°C) determined by subjecting a procured sample resin or a resin constituting a porous membrane as it is to a temperature-increase process according to DSC. More specifically, a vinylidene fluoride resin procured generally exhibits a melting point Tm 1 (°C) different from an inherent melting point Tm2 (°C) of the resin, due to thermal and mechanical history thereof received in the course of its production or heat-forming process, etc. The melting point Tm2 (°C) of vinylidene fluoride resin defining the present invention is defined as a melting point (a peak temperature of heat absorption according to crystal melting) observed in the course of DSC re-heating after once subjecting a procured sample resin to a prescribed temperature increase and decrease cycle in order to remove the thermal and mechanical history thereof, and details of the measurement method will be described prior to the description of Examples appearing hereinafter.

The condition of Tm2 - Tc ≤ 32°C representing the crystallinity of vinylidene fluoride resin forming the porous membrane of the present invention may possibly be accomplished, e.g., by a lowering in Tm2 according to copolymerization, but in this case, the resultant hollow fiber porous membrane is liable to have a lower chemical resistance in some cases. Accordingly, in a preferred embodiment of the present invention, there is used a vinylidene fluoride resin mixture formed by blending 70-98 wt.% of a vinylidene fluoride resin having a weight-average molecular weight molecular weight of $1.5 \times 10^5$-$6 \times 10^5$ as a matrix (or principal) resin and 2 - 30 wt.% of a high-molecular weight vinylidene fluoride resin having an Mw that is at least 1.8 times, preferably at least 2 times, that of the former and at most $1.2 \times 10^6$, for crystallinity modification. According to such a method, it is possible to significantly increase the crystallization temperature Tc without changing the crystal melting point of the matrix resin alone (represented by Tm2 in a range of preferably 170 - 180°C). More specifically, by increasing Tc, in the case of a preferential cooling from one surface, it becomes possible to accelerate the solidification of the vinylidene fluoride resin at a region from an inner portion of film toward an opposite surface, where the cooling is retarded compared with the film surface, thereby suppressing the growth of spherulites. Tc is preferably at least 143°C.

If Mw of the high-molecular weight vinylidene fluoride resin is below 1.8 times Mw of the matrix resin, it becomes difficult to sufficiently suppress the growth of spherulites. On the other hand, above $1.2 \times 10^6$, the dispersion thereof in the matrix resin becomes difficult.

Further, if the addition amount of the high-molecular weight vinylidene fluoride resin is below 2 wt.%, the effect of suppressing spherulite texture formation is liable to be insufficient, and in excess of 30 wt.%, the texture of phase separation between the vinylidene fluoride resin and the plasticizer is liable to become excessively fine, thus lowering the water permeation rate of the resultant membrane.

According to the present invention, a plasticizer and a good solvent for vinylidene fluoride resin are added to the above-mentioned vinylidene fluoride resin to form a starting composition for formation of the membrane.

(Plasticizer)

As the plasticizer, aliphatic polyesters of a dibasic acid and a glycol may generally be used. Examples thereof may include: adipic acid-based polyesters of, e.g., the adipic acid-propylene glycol type, and the adipic acid-1, 3-butylene glycol type; sebacic acid-based polyesters of, e.g., the sebacic acid-propylene glycol type; and azelaic acid-based polyesters of, e.g., the azelaic acid-propylene glycol type, and azelaic acid-1, 3-butylene glycol type.

(Good solvent)

As the good solvent for vinylidene fluoride resin, those capable of dissolving vinylidene fluoride resin in a temperature range of 20 - 250°C may be used. Examples thereof may include: N-methylpyrrolidone, dimethylformamide, dimethylacetamide, dimethyl sulfoxide, methyl ethyl ketone, acetone, tetrehydrofuran, dioxane, ethyl acetate, propylene carbonate, cyclohexane, methyl isobutyl ketone, dimethyl phthalate, and solvent mixtures of these. N-methylpyrrolidone (NMP) is particularly preferred in view of its stability at high temperatures.

(Composition)

The starting composition for formation of the porous membrane may preferably be obtained by mixing 100 wt. parts of the vinylidene fluoride resin with the plasticizer and the good solvent for vinylidene fluoride resin in a total amount of 100 - 300 wt. parts, more preferably 140 - 220 wt. parts, including 20 - 35 wt.% thereof, more preferably 22.5 - 32.5 wt.% thereof, of the good solvent.

If the total amount of the plasticizer and the good solvent is too small, the viscosity of the composition at the time of melt-extrusion becomes excessively high to cause melt fracture. If the total amount is too large, the viscosity is excessively lowered to cause the collapse of the hollow fiber. In both cases, even if the above-mentioned abnormalities can be obviated, it becomes difficult to obtain a porous hollow-fiber having a uniformly and appropriately high porosity, and thus filtration performance (water permeability). Further, if the proportion of the good solvent in the total amount of the both components is below 20 wt.%, it becomes difficult to attain the effect of uniform pore size which is a characteristic of the present invention. On the other hand, if the proportion of the good solvent exceeds 35 wt.%, the crystallization of the resin in the cooling bath becomes insufficient, thus being liable to cause the collapse of the hollow-fiber, so that the formation of the hollow-fiber per se becomes difficult.

(Mixing and Melt-extrusion)

The melt-extrusion composition may be extruded into a hollow fiber film by extrusion through an annular nozzle at a temperature of 140 - 270°C, preferably 150 - 200°C. Accordingly, the manners of mixing and melting of the vinylidene fluoride resin, plasticizer and good solvent are arbitrary as far as a uniform mixture in the above-mentioned temperature range can be obtained consequently. According to a preferred embodiment for obtaining such a composition, a twin-screw kneading extruder is used, and the vinylidene fluoride resin (preferably in a mixture of a principal resin and a crystallinity-modifier resin) is supplied from an upstream side of the extruder and a mixture of the plasticizer and the good solvent is supplied at a downstream position to be formed into a uniform mixture until they pass through the extruder and are discharged. The twin-screw extruder may be provided with a plurality of blocks capable of independent temperature control along its longitudinal axis so as to allow appropriate temperature control at respective positions depending on the contents of the materials passing therethrough.

(Cooling)

Then, the melt-extruded hollow fiber film is cooled preferentially from an outside thereof and solidified by introducing it into a cooling liquid bath. In this instance, if the hollow-fiber film is cooled while an inert gas, such as air or nitrogen, is injected into the hollow part thereof, a hollow-fiber film having an enlarged diameter can be obtained. This is advantageous for obtaining a hollow-fiber porous membrane which is less liable to cause a lowering in water permeation rate per unit area of the membrane even at an increased length of the hollow-fiber membrane (Japanese Patent Application 2003-346396). As the cooling liquid, a liquid which is inert (i.e., showing non-solvency and non-reactivity) with respect to vinylidene fluoride resin, is generally used, and preferably water is used. In some case, a good solvent for vinylidene fluoride resin (similar to those used in the above-mentioned melt-extrusion composition) which is miscible with the cooling liquid (preferably, NMP miscible with water) can be mixed at a proportion of 30 - 90 wt.%, preferably 40 - 80 wt.%, of the cooling liquid, so as to enlarge the pore size at the outer surface of the resultant hollow-fiber porous membrane, whereby it becomes possible to obtain a hollow-fiber porous membrane having a layer of minimum pore size inside the membrane, which is advantageous for regeneration by air scrubbing (Japanese Patent Application 2005-037556). The temperature of the cooling medium may be selected from a fairly wide temperature range of 0 - 120°C, but may preferably be in a range of 5 - 100°C, particularly 5 - 80°C.

(Extraction)

The cooled and solidified hollow fiber film is then introduced into an extraction liquid bath to remove the plasticizer and the good solvent therefrom, thereby forming a hollow fiber membrane. The extraction liquid is not particularly restricted provided that it does not dissolve the vinylidene fluoride resin while dissolving the plasticizer and the good solvent. Suitable examples thereof may include: polar solvents having a boiling point on the order of 30 - 100°C, inclusive of alcohols, such as methanol and isopropyl alcohol, and chlorinated hydrocarbons, such as dichloromethane and 1,1,1-trichloroethane.

(Stretching)

The hollow-fiber film or membrane after the extraction may preferably be subjected to stretching in order to increase the porosity and pore size and improve the strength-elongation characteristic thereof. The stretching may preferably be effected as a uniaxial stretching in the longitudinal direction of the hollow-fiber membrane by means of, e.g., a pair of rollers rotating at different circumferential speeds. This is because it has been found that a microscopic texture including a stretched fibril portion and a non-stretched node portion appearing alternately in the stretched direction is preferred for the hollow-fiber porous membrane of vinylidene fluoride resin of the present invention to exhibit a harmony of porosity and strength-elongation characteristic thereof. The stretching ratio may suitably be on the order of 1.2 - 4.0 times, particularly 1.4 - 3.0 times. It is preferred to heat-treat the hollow-fiber film or membrane for 1 sec. - 18000 sec., preferably 3 sec. - 3600 sec., in a temperature range of 80 - 160°C, preferably 100 - 140°C, to increase the crystallinity in advance of the stretching for the purpose of improving the stretchability.

(Wetting treatment)

According to the present invention, a porous hollow-fiber membrane of the present invention is obtained in the above-described manner, but it is preferred to subject the membrane to a wetting treatment with a liquid wetting the hollow-fiber membrane of vinylidene fluoride resin. This is because, by the wetting treatment, the water permeability of the hollow-fiber porous membrane of the present invention can be increased remarkably without substantially impairing the characteristics thereof.
A liquid having a surface tension (JIS K6768) smaller than a wet tension of vinylidene fluoride resin may be used as a wetting liquid for the porous membrane of vinylidene fluoride resin. More specifically, the wetting liquid may be selected from alcohols, such as methanol, ethanol and isopropanol, and halogenated hydrocarbons, such as dichloromethane and 1,1,1-trichloroethane and may preferably be a polar solvent having a boiling point of, ca. 30 - 100°C.
In the wetting treatment, a hollow-fiber porous membrane having been subjected to stretching may preferably be also subjected to a relaxation treatment. The relaxation of a hollow-fiber porous membrane in a wet state may preferably be effected by passing such a porous membrane wetted with a wetting liquid through a pair of an upstream roller and a downstream roller rotating at successively decreasing circumferential speeds.
Even at a small value of the relaxation percentage determined by (1 - (the downstream roller circumferential speed / the upstream roller circumferential speed)) × 100(%), a certain effect of increasing the water permeability can be attained, but in order to attain a further effective result, the relaxation percentage may preferably be in a range of 2 - 15 %, particularly 5 - 10 %. Below 2 %, the effect by the relaxation may not be remarkable, and a relaxation percentage in excess of 15 % is difficult to achieve while it depends on a stretching ratio applied to the porous membrane to be relaxed so that it becomes difficult to obtain a hollow-fiber porous membrane through the desired degree of relaxation.
The wet state as an environment for effecting the relaxation of a hollow-fiber porous membrane subjected to stretching as described above may conveniently be formed as a state of the porous membrane immersed in a wetting liquid, but it is also possible to dip a porous membrane within a wetting liquid to impregnate the porous membrane with the wetting liquid and then introduce the porous membrane into a liquid not wetting vinylidene fluoride resin (e.g., water) or a gas such as air, to cause the relaxation.

The relaxation temperature may preferably be 0 - 100°C, particularly 5 - 80°C. The time for the relaxation treatment may be a short period or a long period as far as a desired relaxation percentage can be attained. It is generally within a range of ca. 5 sec to 1 min., but it is not necessary to be in this range.

A remarkable effect of the above-mentioned relaxation treatment in a wet state is an increase in water permeability of the resultant hollow-fiber porous membrane, whereas the pore size distribution is not substantially changed and the porosity tends to be somewhat lowered. The thickness of the porous membrane is not substantially changed, whereas the inner diameter and the outer diameter of the hollow-fiber membrane tend to be increased.

It is also preferred to effect a dry heat-relaxation treatment in a gas, such as air, before and/or after, particularly after the above-mentioned wet relaxation treatment. By such a dry heat-relaxation treatment, it is difficult to expect an effect of increasing the water permeability (i.e., substantially no change in water permeability is caused) but the pore sizes are somewhat decreased and uniformized, so that an improved performance in separation of fine particles within a liquid to be processed through the porous membrane can be attained. This is particularly preferred for the purpose of the present invention. It should be noted, however, that a relaxation treatment in air immediately after the wet relaxation treatment also results in an effect of wet relaxation owing to the wetting liquid remaining in the porous membrane.

The dry heat-relaxation treatment may be preferably performed at a temperature of 80 - 160°C, particularly 100 - 140°C, so as to effect a relaxation percentage of ca. 0 - 10 %, particularly 2 - 10 %. The relaxation percentage of 0 % corresponds to, e.g., a heat-fixation treatment after the wet relaxation.

(Hollow-fiber porous membrane of vinylidene fluoride resin)

The hollow-fiber porous membrane of the present invention obtained through a series of the above-mentioned steps is characterized by a pore size distribution according to the half-dry/bubble point method (ASTM · F316 and ASTM · E1294) exhibiting an average pore size Pm of 0.05 - 0.20 $\mu$m, preferably 0.07 - 0.15 $\mu$m; a maximum pore size Pmax giving a ratio Pmax/Pm of at most 2.0, particularly 1.4 - 1.8; and a standard deviation of pore size distribution of at most 0.20 $\mu$m, particularly 0.06 - 0.15 $\mu$m. If the average pore size is below 0.05 $\mu$m, the porous membrane is caused to have a lower water permeability. On the other hand, if Pm exceeds 0.20 $\mu$m, the ability of removing turbidity sources and bacteria is lowered. The low Pmax/Pm ratio and the low standard deviation of pore size distribution both represent a high uniformity of pore size in the hollow-fiber porous membrane of the present invention.

Measurement methods for the above-mentioned characteristic values and other characteristic values characterizing the hollow-fiber porous membrane of the present invention will be inclusively described hereinafter.

The hollow-fiber porous membrane of the present invention has another characteristic that it exhibits a large water permeation rate relative to a small average pore size (that is, a good communicativeness of pores). This characteristic is represented by a ratio F (L = 200 mm, v = 70 %) /Pm$^2$ of at least 3000 (m/day · $\mu$m$^2$), preferably at least 3500 (m/day · $\mu$m$^2$), wherein the ratio F (L = 200 mm, v = 70 %)/Pm$^2$ denotes a ratio between F (L = 200 mm, v = 70 %) which is a value normalized to a porosity v = 70 % of a water permeation rate F (100 kPa, L = 200 mm) measured at a test length L = 200 mm under the conditions of a pressure difference of 100 kPa and a water Temperature of 25°C and a square Pm$^2$ of an average pore size Pm. Describing more specifically, if it is assumed that a relationship between a water permeation rate and an (average) pore size follows the Hagen-Poiseuille law, the water permeation rate is proportional to a 4-th power of the (average) pore size while the number of pores is assumed to be inversely proportional to the square of average pore size, so that the water permeation rate is proportional to the square of (average) pore size. The present inventors have acquired experimental results that the square law does not hold true at different porosities but the water permeation rate is proportional to the porosity and have found that the square law between the water permeation rate and the average pore size hold true satisfactorily at a normalized constant porosity (70 % in the present invention) and, based on the relationship, the above-mentioned F (L = 200 mm, v = 70 %) provides a good index of water permeability including a contribution of the capability of removing minute particles based on the good communicativeness of pores in a porous membrane.

Other general features of hollow-fiber porous membranes obtained according to the present invention may include: a porosity of 55 - 90 %, preferably 60 - 85 %, particularly preferably 65 - 80 %; a tensile strength of at least 6 MPa; an elongation at break of at least 5 %. Further, the thickness is ordinarily in the range of 5 - 800 $\mu$m, preferably 50 - 600 $\mu$m, particularly preferably 150 - 500 $\mu$m. The outer diameter of the hollow fiber may suitably be on the order of 0.3 - 3 mm, particularly ca. 1 - 3 mm.

Further, a micro-texture characteristic of the, hollow-fiber porous membrane according to the present invention obtained through the stretching is that it comprises a crystalline oriented portion and a crystalline non-oriented portion (random oriented portion) recognizable by X-ray diffraction, which are understood as corresponding to a stretched fibril portion and a non-stretched node portion, respectively.

[Examples]

Hereinbelow, the present invention will be described more specifically based on Examples and Comparative Examples. The properties described herein including those described below are based on measured values according to the following methods.

(Weight-average molecular weight (Mw))

A GPC apparatus ("GPC-900", made by Nippon Bunko K.K.) was used together with a column of "Shodex KD-806M" and a pre-column of "Shodex KD-G" (respectively made by Showa Denko K.K.), and measurement according to GPC (gel permeation chromatography) was performed by using NMP as the solvent at a flow rate of 10 ml/min. at a temperature of 40°C to measure polystyrene-based molecular weights.

(Crystalline melting points Tm1, Tm2, crystal melting enthalpy and Crystallization Temperature Tc)

A differential scanning calorimeter "DSC-7" (made by Perkin-Elmer Corp.) was used. A sample resin of 10 mg was set in a measurement cell, and in a nitrogen gas atmosphere, once heated from 30°C up to 250°C at a temperature-raising rate of 10°C/min., then held at 250°C for 1 min. and cooled from 250°C down to 30°C at a temperature-lowering rate of 10°C/min., thereby to obtain a DSC curve. On the DSC curve, an endothermic peak temperature in the course of heating was determined as a melting point Tm1 (°C), and a heat of absorption by the endothermic peak giving Tm 1 was measured as a crystal melting enthalpy. Further, an exothermic peak temperature in the course of cooling was determined as a crystallization temperature Tc(°C). Successively thereafter, the sample resin was held at 30°C for 1 min., and re-heated from 30°C up to 250°C at a temperature-raising rate of 10°C/min. to obtain a DSC curve. An endothermic peak temperature on the re-heating DSC curve was determined as an inherent melting point Tm2 (°C) defining the crystallinity of vinylidene fluoride resin in the present invention.

(Porosity)

The length and also the outer diameter and inner diameter of a sample hollow fiber porous membrane were measured to calculate an apparent volume V (cm$^3$) of the porous membrane, and the weight W (g) of the porous membrane was measured to calculate a porosity according to the following formula:

$$\text{Porosity } (\%) = (1 - W/(V \times \rho)) \times 100,$$

wherein p: density of PVDF (= 1.78 g/cm$^3$).

(Water permeation rate (Flux))

A sample hollow fiber porous membrane having a test length L (as shown in Fig. 1) = 200 mm or 800 mm was immersed in ethanol for 15 min., then immersed in water to be hydrophilized, and then subjected to a measurement of water permeation rate per day (m$^3$/day) at a water temperature of 25°C and a pressure difference of 100 kPa, which was then divided by a membrane area of the hollow-fiber porous membrane (m$^2$) (= outer diameter $\times \pi \times$ test length L) to provide a water permeation rate. The resultant value is indicated, e.g., as F (100 kPa, L = 200 mm) for a sample having a test length L = 200 mm, in the unit of m/day (= $^{m3}/m^2 \cdot$ day). It is known that as the test length L is increased, the water permeation rate per unit membrane area is generally lowered due to an increase in flow resistance through the hollow fiber, so that a basic water permeation rate $F_0$ (m/day) was obtained by extrapolating the measured values F at test lengths L = 200 mm and 800 mm to L = 0 mm.
Further, a water permeation rate F (100 kPa, L = 200 mm) measured at a test length L = 200 mm was normalized at a porosity v = 70 % to obtain F (L = 200 mm, v = 70 %) according to the following formula:

$$F \ (L = 200 \text{ mm}, \text{v} = 70 \ \%)$$

$$= F \ (100 \text{ kPa}, L = 200 \text{ mm}) \ \times \ (70 \ (\%)/\text{v} \ (\%)),$$

and a ratio thereof to the square of average pore size Pm of F (L = 200 mm, v = 70 %)/Pm$^2$ was obtained as a pure water permeation flux representing a communicativeness of pores, thereby evaluating a water permeability while taking capability of removing minute particles into consideration.

(Pore size distribution)

A pore size distribution and a maximum pore size were measured according to the half-dry/bubble point method (according to ASTM · F316-86 and ASTM · E1294-89) by using "PALM POROMETER CFP-2000AZX", made by Porous Materials, Inc. and, based on the measured pore size distribution, an average pore size Pm ($\mu$m), a standard deviation SD ($\mu$m) and a variation coefficient CV were calculated according to formulae (1), (2) and (3) shown below:

$$Pm = (1/n)\,(P_1f_1 + P_2f_2 + \text{---} + P_kf_k) = (1/n)\,\sum_{i=1}^{k} P_if_i \quad \text{---}\quad (1)$$

Pi: diameter of individual pore, f: frequency,
n: number of data.

$$SD = (1/n)\sum_{i=1}^{k} f_i\,(P_i - Pm) = (1/n)\sum_{i=1}^{k} f_iP_i{}^2 - Pm^2 \quad \text{---}\quad (2)$$

$$CV\ (\%) = (SD/\bar{p}) \times 100 \quad \text{---}\quad (3)$$

Further, a ratio Pmax/Pm(-) between the maximum pore size Pmax and the average pore size Pm were obtained.

(Blocking rate of polystyrene latex particles)

A rate of blocking of polystyrene latex particles was measured in order to evaluate a minute particle removing performance of a hollow-fiber porous membrane as a separating membrane for water treatment. More specifically, a 10 wt.% latex of polystyrene particles with a monodisperse particle size of 0.262 $\mu$m or 0.132 $\mu$m (made by Ceradine K.K.) was diluted to form a sample supply liquid of 200 ppm, in view of the fact that chlorine-resistant pasogenic microbes represented by cryptosporidium as principal objects to be removed for production of potable water have sizes of 0.3 - 0.5 $\mu$m. Then, a porous hollow-fiber sample at a length L = 800 mm, which had been subjected to hydrophilization with ethanol followed by replacement with water, was set in a flux meter (as shown in Fig. 1) and used for filtrating 1 liter of the sample supply liquid at a constant pressure of 10 kPa to obtain a filtered liquid. The supply liquid and the filtered liquid were subjected to measurement of absorbance spectra by means of an ultraviolet-visible spectrophotometer ("UV-2200", made by K.K. Shimadzu Seisakusho) to obtain peak absorbances, from which the concentrations of the respective liquids were determined. A blocking rate was determined from Formula (1) below. Incidentally, a calibration curve of absorbances versus concentrations of polystyrene latex particles was prepared in advance of the measurement to confirm a linearity between peak absorbances and concentrations in a concentration range of 0.3 - 10 ppm. The blocking rate for polystyrene latex particles having a diameter of 0.262 pm is preferably at least 90 %, particularly 100 %. The blocking rate for polystyrene particles having a diameter of 0.132 $\mu$m is preferably at least 80 %, particularly at least 90%.

$$R = (1 - Cp/Cb) \times 100 \ \text{---}\ (1),$$

wherein R (%): blocking rate, Cb: concentration in the supply liquid,
and Cp: concentration in the filtered liquid.

(Example 1)

A principal polyvinylidene fluoride (PVDF) (powder) having a weight-average molecular weight (Mw) of 4.12 x

$10^5$ and a crystallinity-modifier polyvinylidene fluoride (PVDF) (powder) having Mw = 9.36 $\times$ $10^5$ were blended in pro-portions of 95 wt.% and 5 wt.%, respectively, by a Henschel mixer to obtain a mixture A having Mw = 4.38 $\times$ $10^5$.

An adipic acid-based polyester plasticizer ("PN-150", made by Asahi Denka Kogyo K.K.) as an aliphatic polyester and N-methylpyrrolidone (NMP) as a solvent were mixed under stirring in a ratio of 77.5 wt.%/22.5 wt.% at room temperature to obtain a mixture B.

An equi-directional rotation and engagement-type twin-screw extruder ("BT-30", made by Plastic Kogaku Kenkyusyo K.K.; screw diameter: 30 mm, L/D = 48) was used, and the mixture A was supplied from a powder supply port at a position of 80 mm from the upstream end of the cylinder and the mixture B heated to 160°C was supplied from a liquid supply port at a position of 480 mm from the upstream end of the cylinder at a ratio of mixture A/mixture B = 35.7/64.3 (wt.%), followed by kneading at a barrel temperature of 220°C to extrude the melt-kneaded product through a nozzle having an annular slit of 7 mm in outer diameter and 5 mm in inner diameter into a hollow fiber-form extrudate at a rate of 11.8 g/min. In this instance, air was injected into a hollow part of the fiber at a rate of 4.0 ml/min. through an air supply port provided at a center of the nozzle.

The extruded mixture in a molten state was introduced into a cooling bath of water maintained at 40°C and having a surface 280 mm distant from the nozzle (i.e., an air gap of 280 mm) to be cooled and solidified (at a residence time in the cooling bath of ca. 3 sec.), pulled up at a take-up speed of 10 m/min. and wound up about a reel of ca. 1 m in diameter to obtain a first intermediate form.

Then, the first intermediate form was immersed under vibration in dichloromethane at room temperature for 30 min., followed by immersion in fresh dichloromethane again under the same conditions to extract the plasticizer and solvent and further by 1 hour of heating in an oven at 120°C for removal of the dichloromethane and heat treatment, thereby to obtain a second intermediate form.

Then, the second intermediate form was longitudinally stretched at a ratio of 2.0 times by passing it by a first roller at a speed of 12.5 m/min., through a water bath at 60°C and by a second roller at a speed of 25.0 m/min. Then, the intermediate form was caused to pass through a bath of dichloromethane controlled at 5°C and by a third roller at a lowered speed of 23.8 m/min. to effect a 5 %-relaxation treatment in the dichloromethane bath. The form was further caused to pass through a dry heating bath (of 2.0 m in length) controlled at a spatial temperature of 140°C and by a fourth roller at a lowered speed of 22.6 m/min. to effect a 5 %-relaxation treatment in the dry heating bath and was taken up to provide a polyvinylidene fluoride-based hollow-fiber porous membrane (a third form) according to the process of the present invention.

The resultant polyvinylidene fluoride-based hollow-fiber porous membrane exhibited an outer diameter of 1.045 mm, an inner diameter of 0.600 mm, a membrane thickness of 0.223 mm, a porosity of 71 %, pure water permeabilities F (L, 100 kPa) at a pressure difference of 100 kPa including F (L = 200 mm, 100 kPa) = 60.4 m/day at a test length L = 200 mm, F (L = 200 mm, v = 70 %) = 59.4 m/day as a value normalized at a porosity of 70 %, F (L = 800 mm, 100 kPa) = 39.3 m/day and a basic water permeability Fo (L = 0 mm, 100 kPa) = 67.5 m/day, an average pore size Pm = 0.118 $\mu$m, a maximum pore size Pmax = 0.184 $\mu$m, Pmax/ Pm = 1.6, and a ratio F (L = 200 mm, v = 70 %)/Pm$^2$ = 4264. Further, the block rate for polystyrene latex particles of 0.262 $\mu$m was 100 %.

The production conditions and physical properties of the thus-obtained polyvinylidene fluoride-based hollow-fiber porous membrane are inclusively shown in Table 1 appearing hereinafter together with the results of the following Examples and Comparative Examples.

] (Example 2)

A hollow-fiber porous membrane was prepared in the same manner as Example 1 except for changing the mixing ratio of the mixture B to 72.5 wt.%/27.5 wt.% and the stretching ratio to 1.4 times.

(Example 3)

A hollow-fiber porous membrane was prepared in the same manner as Example 1 except for changing the mixing ratio of the mixture B to 72.5 wt.%/27.5 wt.% and the stretching ratio to 1.8 times.

(Example 4)

A hollow-fiber porous membrane was prepared in the same manner as in Example 1 except for changing the mixing ratio in the mixture B to 72.5 wt.%/27.5 wt.%, the water bath Temperature to 48°C and the stretching ratio to 2.2 times.

(Example 5)

A hollow-fiber porous membrane was prepared in the same manner as in Example 1 except for changing the mixing ratio in the mixture B to 67.5 wt.%/32.5 wt.%, the water bath Temperature to 38°C and the stretching ratio to 2.4 times.

(Comparative Example 1)

A hollow-fiber porous membrane was prepared in the same manner as in Example 1 except for changing the mixing ratio in the mixture B to 82.5 wt.%/ 17.5 wt.%, the water bath Temperature to 78°C and the stretching ratio to 1.4 times.

(Comparative Example 2)

A hollow-fiber porous membrane was prepared in the same manner as in Example 1 except for changing the mixing ratio in the mixture B to 82.5 wt.%/ 17.5 wt.% and the stretching ratio to 2.4 times.

(Comparative Example 3)

The extrusion was performed in the same manner as in Example 1 except for changing the mixing ratio in the mixture B to 62.5 wt.%/37.5 wt.%, whereby hollow-fiber collapse occurred in the water bath, thus failing to provide a hollow-fiber porous membrane.

(Comparative Example 4)

A second intermediate form was obtained in the same manner as in Example 1 except for changing the Mw of the modifier PVDF to $6.91 \times 10^5$, the proportions of principal PVDF/modifier PVDF to 75 wt.%/25 wt.%, the mixing ratio of plasticizer/solvent in the mixture B to 82.5 wt.%/ 17.5 wt.%, the proportions of mixture A/mixture B to 34.3 wt.%/65.7 wt.%, the extrusion rate through the nozzle to 9.8 g/min., the air injection rate to the hollow part to 6.2 ml/min, the air gap to 350 mm, the water bath Temperature to 60°C and the take-up speed to 5 m/min.

Then, the second intermediate form was longitudinally stretched at a ratio of 1.4 times at an environmental Temperature of 25°C and then immersed under vibration in dichloromethane at room temperature for 30 min. while being fixed so as not shrink in the longitudinal direction, followed by immersion in fresh dichloromethane again under the same conditions and further by 1 hour of heating in an oven at 150°C for removal of the dichloromethane and heat setting, thereby to obtain a hollow-fiber porous membrane.

The production conditions of the above-described Examples and Comparative Examples, and the physical properties of the resultant hollow-fiber porous membranes are inclusively shown in the following Table 1.

[Table 1]

| | | Example | 1 | 2 | 3 | 4 | 5 | Comp. 1 | Comp. 2 | Comp.3 *1 | Comp.4 |
|---|---|---|---|---|---|---|---|---|---|---|---|
| Starting material composition | Mixture A | Principal PVDF's Mw ($\times 10^5$) | 4.12 | 4.12 | 4. 12 | 4.12 | 4. 12 | 4.12 | 4. 12 | 4.12 | 4.12 |
| | | Modifier PVDF's s Mw ($\times 10^5$) | 9.36 | 9.36 | 9.36 | 9.36 | 9. 36 | 9.36 | 9. 36 | 9. 36 | 6. 91 |
| | | PVDF mixing ratio (wt.%) | 95/5 | 95/5 | 95/5 | 95/5 | 95/5 | 95/5 | 95/5 | 95/5 | 75/25 |
| | | Mixture's Mw ($\times 10^5$) | 4.38 | 4.38 | 4.38 | 4.38 | 4.38 | 4. 38 | 4.38 | 4. 38 | 4. 82 |
| | Mixture B | Polyester Plasticizer | PN-150 | PN-150 | PN-150 | PN-150 | PN-150 | PN-150 | PN-150 | PN-150 | PN-150 |
| | | Solvent | NMP | NMP | NMP | NMP | NMP | NMP | NMP | NMP | NMP |
| | | Plasticizer/ solvent mixing ratio (wt. %) | 77.5/22.5 | 72. 5/27. 5 | 72.5/27.5 | 72.5/27.5 | 67.5/32.5 | 82.5/17.5 5 | 82.5/17.5 | 62.5/37.5 | 82. 5/17. 5 |
| | | Mixture A/ Mixture B Supply ratio (wt. %) | 100/180 | 100/180 | 100/180 | 100/180 | 100/180 | 100/180 | 100/180 | 100/180 | 100/192 |
| Production conditions | | Water bath temp. (°C) | 40 | 40 | 40 | 48 | 38 | 78 | 70 | 20-80 | 60 |
| | | Take-up speed (m/min) | 10 | 10 | 10 | 10 | 10 | 10 | 10 | 10 | 5 |
| | | Stretch temp. (°C) | 60 | 60 | 60 | 60 | 60 | 60 | 60 | | 25 |
| | | Stretch ratio | 2.0 | 1.4 | 1.8 | 2. 2 | 2. 4 | 1.4 | 2. 4 | | 1.4 |
| | | Relaxation liquid medium | $CH_2Cl_2$ | $CH_2Cl_2$ | $CH_2Cl_2$ | $CH_2Cl_2$ | $CH_2Cl_2$ | $CH_2Cl_2$ | $CH_2Cl_2$ | | - |

| Example | | 1 | 2 | 3 | 4 | 5 | Comp. 1 | Comp. 2 | Comp.3 *1 | Comp.4 |
|---|---|---|---|---|---|---|---|---|---|---|
| | Relaxation ratio in liquid (%) | 5 | 5 | 5 | 5 | 5 | 5 | 5 | | - |
| | Relaxation temp. in air (°C) | 140 | 140 | 140 | 140 | 140 | 140 | 140 | | - |
| | Relaxation ratio in air (%) | 5 | 5 | 5 | 5 | 5 | 5 | 5 | | - |
| Physical properties | Outer diameter (mm) | 1. 045 | 1.060 | 1.069 | 1. 037 | 1. 026 | 1.106 | 1.056 | | 1.532 |
| | Inner diameter (mm) | 0. 600 | 0. 609 | 0. 610 | 0. 584 | 0. 595 | 0.634 | 0. 598 | | 0. 989 |
| | Thickness (mm) | 0. 223 | 0. 226 | 0. 229 | 0. 226 | 0.216 | 0. 236 | 0. 229 | | 0. 272 |
| | Poros i ty v (%) | 71 | 60 | 68 | 73 | 73 | 65 | 76 | | 74 |
| | Average pore size Pm (μm) | 0. 118 | 0.084 | 0. 105 | 0. 140 | 0. 110 | 0. 122 | 0. 188 | | 0.095 |
| | Maximum pore size Pmax (μm) | 0. 184 | 0. 125 | 0. 160 | 0. 232 | 0. 186 | 0. 228 | 0. 359 | | 0. 190 |
| | Pmax/Pm | 1.6 | 1.5 | 1.5 | 1. 7 | 1.7 | 1. 9 | 1.9 | | 2. 0 |
| | Standard deviation of pore size distribution (μm) | 0. 118 | 0.076 | 0.074 | 0.117 | 0.092 | 0.216 | 0. 230 | | 0. 246 |
| | Variation coefficient of pore size distribution (%) | 100 | 91 | 70 | 84 | 83 | 177 | 123 | | 259 |

| Example | | 1 | 2 | 3 | 4 | 5 | Comp. 1 | Comp. 2 | Comp.3 *1 | Comp.4 |
|---|---|---|---|---|---|---|---|---|---|---|
| | Water permeability F (100kPa, L=200mm) (m/day) | 60. 4 | 27.7 | 51. 8 | 83.4 | 56. 4 | 38. 3 | 103. 5 | | 57.0 |
| | Water permeability F (100kPa, L=800mm) (m/day) | 39. 3 | 21. 4 | 35. 3 | 47. 3 | 41. 1 | 28.4 | 54. 5 | | 55.4 |
| | Basic water permability Fo (100kPa, L=0mm) (m/day) | 67. 5 | 29. 8 | 57. 3 | 95.4 | 61.5 | 41. 6 | 119. 8 | | 59. 3 |
| | Normalized water permeability F (L=200mm, v=70%) (m/day) | 59. 4 | 32. | 53. 2 | 79. 7 | 54.1 | 41.4 | 95. 3 | | 54. 0 |
| | F (L=200mm, v=70%) /Pm$^2$ (m/day· $\mu$m$^2$) | 4264 | 4553 | 4787 | 4090 | 4451 | 2775 | 2709 | | 5986 |
| | Polystyrene latex (0.262 $\mu$m) block rate (%) | 100 | 100 | 100 | 100 | 100 | 100 | 75 | | 100 |

EP 1 913 992 A1

| Example | | 1 | 2 | 3 | 4 | 5 | Comp. 1 | Comp. 2 | Comp.3 *1 | Comp.4 |
|---|---|---|---|---|---|---|---|---|---|---|
| | Polystyrene latex (0.132 $\mu$m) block rate (%) | 100 | 100 | 100 | 100 | 100 | 60 | 20 | | 70 |
| *1: Hollow fiber production in Comparative Example 3 was impossibile. | | | | | | | | | | |

As shown in Table 1 above, according to the present invention, in a process of producing a hollow-fiber porous membrane by melt-extruding a mixture of a vinylidene fluoride resin, a plasticizer and a good solvent for vinylidene fluoride resin into a hollow fiber-form, followed by cooling and extraction of the plasticizer, the proportion of the good solvent in the total amount of the plasticizer and the good solvent contained in the mixture is increased to 22.5 - 32.5 wt.%. The resultant hollow-fiber porous membrane of the present invention shows a uniform pore size distribution represented by a Pmax/Pm ratio of at most 2.0 and a standard deviation of at most 0.20 $\mu$m and also exhibits a large water permeability regardless of a good polystyrene latex blocking rate as represented by a large F (L = 200 mm, v = 70 %)/Pm$^2$ ratio.

**Claims**

1.  A hollow-fiber porous membrane, comprising a hollow fiber-form porous membrane of vinylidene fluoride resin and having an average pore size Pm of 0.05 - 0.20 $\mu$m, a maximum pore size Pmax giving a ratio Pmax/Pm of at most 2.0 between the maximum pore size Pmax and the average pore size Pm and a standard deviation of pore size distribution of at most 0.20 $\mu$m based on a pore size distribution according to the half dry/bubble point method (ASTM - F316 and ASTM·E1294).

2.  A hollow-fiber porous membrane according to Claim 1, having a porosity of 55 - 90 %.

3.  A hollow-fiber porous membrane according to Claim 1, exhibiting a ratio F (L = 200 mm, v = 70 %)/Pm$^2$ of at least 3000 (m/day·$\mu$m$^2$), wherein the ratio F (L = 200 mm, v = 70 %)/Pm$^2$ denotes a ratio between F (L = 200 mm, v = 70 %) which is a value normalized to a porosity v = 70 % of a water permeation rate F (100 kPa, L = 200 mm) measured at a test length L = 200 mm under the conditions of a pressure difference of 100 kPa and a water Temperature of 25°C and a square Pm$^2$ of an average pore size Pm.

4.  A hollow-fiber porous membrane according to any one of Claims 1 - 3, comprising a vinylidene fluoride resin which exhibits a difference Tm2 - Tc of at most 32°C between an inherent melting point Tm2 (°C) and a crystallization Temperature Tc (°C) of the resin as determined by differential scanning calorimetry.

5.  A hollow-fiber porous membrane according to any one of Claims 1 - 4, exhibiting a rate of blocking polystyrene particles having a diameter of 0.262 $\mu$m of at least 90 %.

6.  A hollow-fiber porous membrane according to Claim 5, exhibiting a rate of blocking polystyrene particles having a diameter of 0.132 $\mu$m of at least 80 %.

7.  A process for producing a hollow-fiber porous membrane of vinylidene fluoride resin, comprising: adding, to 100 wt. parts of vinylidene fluoride resin, a plasticizer and a good solvent for vinylidene fluoride resin in a total amount of 100 - 300 wt. parts including 20 - 35 wt.% thereof of the good solvent, to form a composition, melt extruding the composition into a hollow-fiber film, introducing the hollow-fiber film into a cooling liquid to cool and solidify the film, and extracting the plasticizer from the hollow-fiber film to recover a hollow-fiber porous membrane.

8.  A production process according to Claim 7, including a step of stretching the hollow-fiber membrane after the extraction of the plasticizer.

9.  A production process according to Claim 8, wherein the hollow-fiber porous membrane after the stretching is subjected to a wet relaxation treatment in a liquid wetting the porous membrane of vinylidene fluoride resin and a relaxation treatment under heating in a gas.

COMPRESSED AIR

PRESS.
GAUGE

PRESSURE ADJUSTER
VALVE

~PRESSURE VESSEL

PROJECTING PORTION
(50mm)

PURE WATER

TEST LENGTH L

SAMPLE HOLLOW FIBER

~WATER RECEIVER
VESSEL

FILTRATED WATER

# FIG. 1

## INTERNATIONAL SEARCH REPORT

| International application No. |
|---|
| PCT/JP2006/313989 |

A. CLASSIFICATION OF SUBJECT MATTER
*B01D71/34*(2006.01)i, *B01D69/08*(2006.01)i, *D01F6/12*(2006.01)i

According to International Patent Classification (IPC) or to both national classification and IPC

B. FIELDS SEARCHED

Minimum documentation searched (classification system followed by classification symbols)
B01D71/34, B01D69/08, D01F6/12

Documentation searched other than minimum documentation to the extent that such documents are included in the fields searched
Jitsuyo Shinan Koho        1922-1996   Jitsuyo Shinan Toroku Koho   1996-2006
Kokai Jitsuyo Shinan Koho  1971-2006   Toroku Jitsuyo Shinan Koho   1994-2006

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y | WO 2004/081109 A1  (Kureha Chemical Industry Co., Ltd.),<br>23 September, 2004 (23.09.04),<br>Particularly, Claims; page 3, line 7 to page 4, line 12<br>& CA 2518948 A | 1-5,7-9<br>6 |
| X<br>Y | JP 11-319522 A  (Asahi Chemical Industry Co., Ltd.),<br>24 November, 1999 (24.11.99),<br>Particularly, Claims; Par. Nos. [0023], [0033], [0078]; examples<br>& WO 1999/047593 A1    & US 2004/0135274 A1<br>& EP 1063256 A1        & AU 2748099 A<br>& CA 2322855 A | 1-3,5,6<br>4,7-9 |

| ☒  Further documents are listed in the continuation of Box C. | ☐  See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered   to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>    25 September, 2006 (25.09.06) | Date of mailing of the international search report<br>    03 October, 2006 (03.10.06) |
|---|---|
| Name and mailing address of the ISA/<br>    Japanese Patent Office | Authorized officer |
| Facsimile No. | Telephone No. |

Form PCT/ISA/210 (second sheet) (April 2005)

**INTERNATIONAL SEARCH REPORT**

| International application No. |
| --- |
| PCT/JP2006/313989 |

C (Continuation). DOCUMENTS CONSIDERED TO BE RELEVANT

| Category* | Citation of document, with indication, where appropriate, of the relevant passages | Relevant to claim No. |
| --- | --- | --- |
| Y | JP 7-173323 A (Kureha Chemical Industry Co., Ltd.), 11 July, 1995 (11.07.95), Particularly, Claim 2; Par. Nos. [0013] to [0015] & US 5514461 A & US 5626805 A | 1-9 |
| Y | WO 2005/032700 A1 (Kureha Chemical Industry Co., Ltd.), 14 April, 2005 (14.04.05), Particularly, page 5, line 25 to page 6; page 9, line 16 to page 10, line 13 (Family: none) | 1-9 |

Form PCT/ISA/210 (continuation of second sheet) (April 2005)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 63296939 A
- JP 63296940 A
- JP 3215535 A
- WO 2004081109 A
- JP 2003346396 A
- JP 2005037556 A